# EUROPÄISCHE PATENTSCHRIFT

(11) **EP 2 046 183 B1**
(45) Veröffentlichungstag und Bekanntmachung des Hinweises auf die Patenterteilung: **01.09.2010**
(21) Anmeldenummer: 06776509.9
(22) Anmeldetag: 29.07.2006
(51) Int. Cl.: A47L 9/20

(54) **VERFAHREN ZUM ABREINIGEN DER FILTER EINES STAUBSAUGERS SOWIE STAUBSAUGER ZUR DURCHFÜHRUNG DES VERFAHRENS**
METHOD FOR CLEANING THE FILTERS OF A VACUUM CLEANER AND VACUUM CLEANER FOR CARRYING OUT THE METHOD
PROCÉDÉ POUR NETTOYER LE FILTRE D'UN ASPIRATEUR ET ASPIRATEUR POUR METTRE EN OEUVRE LE PROCÉDÉ

(43) Veröffentlichungstag der Anmeldung: 15.04.2009
(73) Patentinhaber: Alfred Kärcher GmbH & Co. KG, 71364 Winnenden (DE)
(72) Erfinder: ECKSTEIN, Daniel, 71364 Winnenden-Baach (DE); LANGEN, Thorsten, 70190 Stuttgart (DE)
(74) Vertreter: Karrais, Martin
(86) Internationale Anmeldenummer: PCT/EP2006/007544
(87) Internationale Veröffentlichungsnummer: WO 2008/014797

(56) Entgegenhaltungen:
- EP-A- 1 656 872
- DE-U1- 20 010 608
- DE-U1- 29 823 411
- JP-A- 2002 028 107
- JP-A- 2006 181 228

## Beschreibung

Die Erfindung betrifft ein Verfahren zum Abreinigen der Filter eines Staubsaugers mit einem Schmutzsammelbehälter, der einen Saugeinlass aufweist und über mindestens ein Filter und zumindest eine Absaugleitung mit mindestens einem Saugaggregat in Strömungsverbindung steht, und mit mindestens einem stromabwärts des mindestens einen Filters in die Absaugleitung einmündenden Fremdlufteinlass, der mittels zumindest eines Schließventils verschließbar ist, wobei das mindestens eine Schließventil einen Ventifkörper aufweist, der zwischen einer Schließstellung, in der er an einem Ventilsitz anliegt, und einer Offenstellung, in der er zum Ventilsitz beabstandet ist, hin und her bewegbar ist, wobei er von einer Schließfeder mit einer Schließkraft und in der Schließstellung zusätzlich von einer Magnethalterung mit einer magnetischen Haltekraft beaufschlagt ist, wobei man zur Abreinigung des mindestens einen Filters zumindest ein Schließventil öffnet und die dem Schmutzsämmelbehälter abgewandte Seite des mindestens einen Filters mit Fremdluft beaufschlagt.

Außerdem betrifft die Erfindung einen Staubsauger zur Durchführung des Verfahrens.

Mittels der hier in Rede stehenden Staubsauger kann Schmutz und vorzugsweise auch Flüssigkeit aufgesaugt werden, indem man den Schmutzsammelbehälter mit Hilfe von mindestens einem Saugaggregat mit Unterdruck beaufschlagt, so dass sich eine Saugströmung ausbildet und Schmutz und Flüssigkeit in den Schmutzsammelbehälter eingesaugt werden können. Die Staubsauger weisen ein oder mehrere Filter auf, die im Strömungsweg zwischen dem Schmutzsammelbehälter und dem mindestens einen Saugaggregat angeordnet sind und der Abscheidung von Feststoffen aus der Saugströmung dienen. Während des Saugbetriebes lagern sich zunehmend Schmutzteilchen an der dem Schmutzsammelbehälter zugewandten Seite des mindestens einen Filters an, so dass das bzw. die Filter nach einiger Zeit abgereinigt werden müssen. Zur Abreinigung kann die dem Schmutzsammelbehälter abgewandte Seite der Filter mit Fremdluft beaufschlagt werden, indem mindestens ein Schließventil geöffnet wird, so dass vom Fremdlufteinlass Fremdluft in die mindestens eine Absaugleitung einströmen und die dem Schmutzsammelbehälter abgewandte Seite des mindestens einen Filters beaufschlagen kann.

In der Gebrauchsmusterschrift DE 298 23 411 U1 wird zur Abreinigung eines Filters vorgeschlagen, einen Saugschlauch, der an den Saugeinlass des Schmutzsammelbehälters angeschlossen ist, kurzzeitig zu verschließen, so dass sich im Schmutzsammelbehälter ein starker Unterdruck ausbildet, und anschließend soll ein Schließventil kurzzeitig geöffnet werden. Das Filter wird dann in Gegenstromrichtung, das heißt entgegen der Richtung der während des normalen Saugbetriebes vorherrschenden Saugströmung, von der Fremdluft durchströmt, so dass sich am Filter anhaftende Schmutzteilchen ablösen.

In der DE 199 49 095 A1 wird der Einsatz von zwei Filtern vorgeschlagen, die wahlweise abgereinigt werden, wobei während der Abreinigung des einen Filters der Saugbetrieb über das andere Filter in eingeschränktem Umfange aufrecht erhalten werden kann.

Aus der JP-A-2002028107 ist ein Verfahren zum Abreinigen eines Filters bekannt, wobei das Filter entgegen der während des normalen Saugbetriebs vorherrschenden Strömungsrichtung von Fremdluft durchströmt werden kann. Hierzu ist ein Fremdlufteinlass vorgesehen, der von einem Ventil geschlossen werden kann. Beim Öffnen des Ventils wird Fremdluft eingesaugt aufgrund der Druckdifferenz zwischen dem Druck im Schmutzsammelbehälter und dem Druck im Außenraum. Diese Druckdifferenz liegt auch bei einem Stopp des Saugbetriebs vor.

Aufgabe der vorliegenden Erfindung ist es, ein Verfahren der gattungsgemäßen Art derart weiterzubilden, dass es eine besonders wirkungsvolle Abreinigung des mindestens einen Filters ermöglicht.

Diese Aufgabe wird bei einem Verfahren der eingangs genannten Art erfindungsgemäß dadurch gelöst, dass man nach dem Abschalten des mindestens einen Saugaggregates zumindest ein Schließventil mindestens einmal öffnet und dann wieder verschließt und die dem Schmutzsammelbehälter abgewandte Seite des mindestens einen Filters mindestens einmal mit Fremdluft beaufschlagt, wobei man die Magnethalterung mit einem Elektromagnet ausrüstet, den man zum Schließen des Schließventils mit Strom beaufschlagt, und wobei man beim Abschalten des Saugaggregats gleichzeitig auch die StromVersorgung des Elektromagneten ausschaltet.

Bei dem erfindungsgemäßen Staubsauger wird die Saugluft mittels der vorhandenen Filter gefiltert, wobei während des normalen Saugbetriebes sämtliche Filter gleichzeitig zum Einsatz kommen. Es kann sich dabei um ein einziges Filter handeln oder auch um mehrere Filter, die gleichzeitig durchströmt werden. Während des normalen Saugbetriebes ist das mindestens eine Schließventil geschlossen, wobei dessen Ventilkörper am Ventilsitz dichtend anliegt und von der Schließfeder mit einer Schließkraft beaufschlagt wird. Das Eindringen von Fremdluft in die Absaugleitung wird somit unterbunden. Zur Abreinigung des mindestens einen Filters öffnet man das Schließventil, so dass die eindringende Fremdluft die dem Schmutzsammelbehälter abgewandte Seite des mindestens einen Filters beaufschlagen kann. Eine derartige Abreinigung kann während des Saugbetriebes in Abhängigkeit vom Verschmutzungsgrad des mindestens einen Filters oder auch zeitabhängig in periodischen Abständen wiederholt werden. Wird der Saugbetrieb beendet, so schaltet der Benutzer das mindestens eine Saugaggregat ab. Hierbei ist vorgesehen, dass man nach dem Abschalten des mindestens einen Saugaggregates das Schließventil zumindest ein weiteres Mal öffnet und wieder verschließt. Dies hat zur Folge, dass der unmittelbar nach dem Abschalten des Saugaggregates im Schmutzsammelbehälter noch vorhandene Unterdruck dazu ausgenutzt wird, über das erneut geöffnete Schließventil Fremdluft anzusaugen, so dass nach dem Abschalten des mindestens einen Saugaggregates die vorhandenen Filter nochmals abgereinigt werden. Es wird also beim Ausschalten des Staubsaugers auf konstruktiv einfache Weise nochmals eine Filterabreinigung durchgeführt. Hierbei macht sich die Erfindung die Erkenntnis zunutze, dass beim Abschalten des Saugaggregates im Schmutzsammelbehälter und in der Absaugleitung noch ein Unterdruck vorliegt, so dass das mindestens eine Schließventil einer Druckdifferenz unterliegt, da es auf einer Seite dem Druck der Fremdluft und auf der anderen Seite dem Unterdruck innerhalb der Absaugleitung ausgesetzt ist. Diese Druckdifferenz ermöglicht es auf konstruktiv einfache Weise, das federbelastete Schließventil nach dem Abschalten des Saugaggregates nochmals zu öffnen und anschließend wieder zu verschließen, so dass die dem Schmutzsammelbehälter abgewandte Seite des mindestens einen Filters nach Beendigung des normalen Saugbetriebes nochmals kurzzeitig mit Fremdluft beaufschlagt wird.

Gemäß der Erfindung rüstet man die Magnethalterung mit einem Elektromagneten aus, den man zum Schließen des Schließventils mit Strom beaufschlagt, und beim Abschalten des Saugaggregates schaltet man gleichzeitig auch die Stromversorgung des Elektromagneten aus. Während des normalen Saugbetriebes kann der Elektromagnet mit Strom beaufschlagt werden, um den Ventilkörper zuverlässig am Ventilsitz zu halten. Wird die Stromversorgung des Elektromagneten unterbrochen, so entfällt die magnetische Haltekraft des Elektromagneten, und aufgrund der am Schließventil herrschenden Druckdifferenz kann sich der Ventilkörper entgegen der Schließkraft der Schließfeder vom Ventilsitz abheben. Fremdluft kann somit in die Absaugleitung eindringen und kann die dem Schmutzsammelbehälter abgewandte Seite des mindestens einen Filters zu dessen Abreinigung beaufschlagen. Von der Schließfeder wird der Ventilkörper anschließend wieder zum Ventilsitz zurückgeführt, und durch erneute Beaufschlagung des Elektromagneten mit Strom kann der Ventilkörper wieder am Ventilsitz gehalten werden zur Fortsetzung des normalen Saugbetriebes. Wird der Saugbetrieb beendet, so wird das Saugaggregat abgeschaltet und gleichzeitig wird auch die Stromversorgung des Elektromagneten unterbrochen. Dies hat zur Folge, wie voranstehend erläutert, dass das Schließventil erneut öffnet und wieder schließt, wobei der Ventilkörper aufgrund des ausgeschalteten Elektromagneten anschließend nicht mehr zuverlässig am Ventilsitz gehalten wird, vielmehr kann er aufgrund der Belastung durch die Schließfeder und des nachlaufenden Saugaggregates mehrfach eine Hin- und Herbewegung durchführen, so dass eine besonders wirkungsvolle Filterabreinigung erzielt werden kann.

Von besonderem Vorteil ist es, wenn man nach dem Abschalten des Saugaggregates zumindest ein Schließventil mehrmals öffnet und wieder verschließt, denn dadurch kann der abschließende Abreinigungsvorgang verstärkt werden.

Das mehrfache Öffnen und Verschließen des Schließventlis nach dem Abschalten des Saugaggregates kann auf konstruktiv einfache Weise dadurch erzielt werden, dass man die beim ersten Öffnen des Schließventils nach dem Abschalten des Saugaggregates eindringende Fremdluft mit Hilfe des allmählich auslaufenden Saugaggregates zumindest zu einem Teil wieder absaugt, so dass sich in der Absaugleitung nach dem erstmaligen Verschließen des Schließventils nochmals ein gewisser Unterdruck einstellt. Das selbsttätige Schließen des Schließventils wird dadurch erzielt, dass der Ventilkörper von der Schließfeder mit einer Schließkraft beaufschlagt wird. Wird nach Beendigung eines normalen Saugbetriebes das Saugaggregat abgeschaltet, so kann das Schließventil aufgrund der einwirkenden Druckdifferenz selbsttätig geöffnet werden, so dass Fremdluft In die Absaugleitung einströmen kann. Unter der Wirkung der Schließfeder kann der sich vom Ventilsitz abhebende Ventilkörper wieder zum Ventilsitz zurückgeführt werden und die zwischenzeitlich eingeströmte Fremdluft kann zumindest zu einem gewissen Teil von dem sich noch in Drehung befindlichen Saugaggregat aus dem Absaugkanal abgeführt werden, so dass sich erneut ein Unterdruck im Absaugkanal ausbildet und damit auch eine Druckdifferenz am Schließventil, so dass dieses erneut kurzzeitig öffnet.

Der abschließende Abreinigungsvorgang wird bei einer bevorzugten Ausführungsform des erfindungsgemäßen Vorganges dadurch verstärkt, dass man den Ventilkörper unabhängig von seiner Stellung permanent mit einer Schließkraft der Schließfeder und in einer zum Ventilsitz beabstandeten Stellung zusätzlich mit einer Rückstoßkraft eines federnden Anschlagelementes beaufschlagt. Das federnde Anschlagelement, das zusätzlich zur Schließfeder zum Einsatz kommt, stellt sicher, dass das mindestens eine Filter wirkungsvoll innerhalb sehr kurzer Zeit abgereinigt werden kann, indem es den sich vom Ventilsitz abhebenden Ventilkörper mit einer Rückstoßkraft beaufschlagt, so dass dieser innerhalb kurzer Zeit zum Ventilsitz zurückgeführt wird. Die schnelle Rückführung des Ventilkörpers in seine Schließstellung hat den Vorteil, dass nach dem Abschalten des Saugaggregates das Schließventil mehrmals innerhalb sehr kurzer Zeit geöffnet und gleich wieder verschlossen werden kann, so dass innerhalb der Nachlaufzeit des Saugaggregates mehrmals kurzzeitig eine Filterabreinigung durchgeführt werden kann. Ein weiterer Vorteil des Einsatzes von einem federnden Anschlagelement liegt darin, dass eine Abreinigung des mindestens einen Filters während des normalen Saugbetriebes innerhalb sehr kurzer Zeit, vorzugsweise innerhalb einer Zeit von weniger als 0,5 Sekunden, beispielsweise innerhalb einer Zeit von weniger als 400 Millisekunden, insbesondere weniger als 200 Millisekunden, durchgeführt werden kann. Dies hat zur Folge, dass sich für den Benutzer keine merkliche Unterbrechung des Saugbetriebes einstellt, vielmehr wird der Saugbetrieb trotz periodischer Filterabreinigung quasi kontinuierlich fortgesetzt. Durch das kurzzeitige Öffnen des mindestens einen Schließventils kann das mindestens eine Filter von der schlagartig eindringende Fremdluft mit einem Druckstoß beaufschlagt werden, der zu einer Erschütterung und damit zu einer mechanischen Abreinigung des Filters führt. Außerdem wird das mindestens eine Filter für kurze Zeit in Gegenstromrichtung von Fremdluft durchströmt. Das Saugaggregat steht auch während der Abreinigung des mindestens einen Filters, also während des Öffnens des Schließventils, mit dem Filter in Strömungsverbindung. Die kurzzeitig in die Absaugleitung einströmende Fremdluft wird somit gleich wieder abgesaugt, so dass sich nach dem Schließen des Schließventils bereits in Bruchteilen von einer Sekunde im Schmutzsammelbehälter wieder der während des normalen Saugbetriebes herrschende Unterdruck einstellt. Das mindestens eine Filter wird demzufolge während des normalen Saugbetriebes in Bruchteilen einer Sekunde ausgehend von der ursprünglichen Saugströmung kurzzeitig von einer Fremdluftströmung und anschließend wieder von der Saugströmung durchströmt. Dies hat eine alternierende mechanische Belastung des mindestens einen Filters zur Folge, wodurch die Filterabreinigung unterstützt wird. Das kurzzeitige Öffnen des Schließventils erfolgt unter der Wirkung der Rückstoßkraft des federnden Anschlagelementes, das den Ventilkörper nur dann mit einer Kraft beaufschlagt, wenn dieser im Abstand zum Ventilsitz angeordnet ist. Liegt der Ventilkörper am Ventilsitz dichtend an, so übt das federnde Anschlagelement auf den Ventilkörper keine Kraft aus. Das Anschlagelement bildet eine Art Stoßdämpfer für den Ventilkörper, der die Bewegungsenergie des Ventilkörpers aufnimmt und den Ventilkörper in Richtung des Ventilsitzes zurück beschleunigt.

Bei einer bevorzugten Ausgestaltung des erfindungsgemäßen Verfahrens rüstet man den Staubsauger nur mit einem einzigen Filter aus, das man zur Abreinigung kurzzeitig mit Fremdluft beaufschlagt.

Der Staubsauger kann mehrere Fremdlufteinlässe aufweisen, die jeweils mittels eines Schließventils verschließbar sind. Durch gleichzeitiges Öffnen aller Schließventile kann innerhalb kurzer Zeit eine große Menge an Fremdluft dem mindestens einen Filter zugeführt werden. Allerdings erfordert dies eine sorgfältige Koordination der Öffnungsbewegungen der zum Einsatz kommenden Ventilkörper der Schließventile. Günstiger ist es, wenn man die gesamte, dem Schmutzsammelbehälter abgewandte Fläche des mindestens einen Filters durch Öffnen von nur einem einzigen Schließventil mit Fremdluft beaufschlagt.

Vorzugsweise wird das mindestens eine Schließventil elektronisch betätigt. Wie bereits erläutert, kann beispielsweise ein Elektromagnet zum Einsatz kommen, mit dessen Hilfe der bewegliche Ventilkörper in einer Schließstellung am Ventilsitz gehalten werden kann, indem der Elektromagnet mit Strom beaufschlagt wird. Um das Schließventil zu öffnen, wird die Stromversorgung des Elektromagneten unterbrochen. Hierbei ist es von Vorteil, wenn man den Ventilkörper mit einem magnetisierbaren Element ausrüstet, das in der Schließstellung des Ventilkörpers stirnseitig am Elektromagnet anliegt und mit dem Elektromagneten einen geschlossenen Magnetkreis ausbildet. Das magnetisierbare Element, beispielsweise eine eisenhaltige Platte, bündelt die Feldlinien des Elektromagneten im Ventilkörper, so dass dieser unter der Wirkung der Magnetkraft zuverlässig in seiner Schließstellung gehalten wird. Nimmt der Ventilkörper jedoch einen Abstand zum Ventilsitz ein, so ist der magnetische Kreis unterbrochen, da auch das magnetisierbare Element einen Abstand zum Elektromagneten einnimmt. Dies hat zur Folge, dass die vom Elektromagneten ausgeübte Magnetkraft nur sehr kurzreichweitig ist. Bei einer Öffnungsbewegung erfährt der Ventilkörper somit nur im unmittelbaren Bereich des Ventilsitzes eine Magnetkraft, bereits in einem Abstand von etwa 2 mm zwischen dem Elektromagneten und dem magnetisierbaren Element ist die Magnetkraft so gering, dass sie den Ventilkörper nicht in seine Schließstellung zurückführen kann. Zum Zurückführen des Ventilkörpers kommt vielmehr die Schließfeder zum Einsatz.

Günstig ist es, wenn man das mindestens eine Schließventil zeitgesteuert betätigt. Es kann beispielsweise vorgesehen sein, dass man das Schließventil periodisch, vorzugsweise in zeitlichen Abständen von weniger als einer Minute, insbesondere in zeitlichen Abständen von 10 bis 30 Sekunden, betätigt, wobei das Schließventil für weniger als eine Sekunde geöffnet wird, insbesondere für weniger als 0,5 Sekunden.

Die Betätigung des mindestens einen Schließventils kann während des normalen Saugbetriebes in unterschiedlichen zeitlichen Abständen erfolgen. Beispielsweise kann man das Schließventil zunächst für 10 bis 30 Sekunden geschlossen halten, um es dann in mehreren kürzeren zeitlichen Abständen, beispielsweise in Abständen von etwa einer Zehntel Sekunde, kurz zu öffnen.

Wie eingangs erwähnt, betrifft die Erfindung auch einen Staubsauger zur Durchführung des voranstehend genannten Verfahrens. Der Staubsauger umfasst einen Schmutzsammelbehälter, der einen Saugeinlass aufweist und über mindestens ein Filter und zumindest eine Absaugleitung mit mindestens einem Saugaggregat in Strömungsverbindung steht. Außerdem umfasst der Staubsauger mindestens ein stromabwärts des mindestens einen Filters in die Absaugleitung einmündenden Fremdlufteinlass, der mittels zumindest eines Schließventils verschließbar ist, wobei das mindestens eine Schließventil einen Ventilkörper aufweist, der zwischen einer Schließstellung, in den er an einem Ventilsitz anliegt, und einer Offenstellung, in der er zum Ventilsitz beabstandet ist, hin und her bewegbar ist, wobei er von einer Schließfeder mit einer Schließkraft und in der Schließstellung zusätzlich von einer Magnethalterung mit einer magnetischen Haltekraft beaufschlagt ist.

Um einen solchen Staubsauger derart weiterzubilden, dass er eine besonders wirkungsvolle Abreinigung des mindestens einen Filters ermöglicht, wird erfindungsgemäß vorgeschlagen, dass das mindestens eine Schließventil nach dem Abschalten des Saugaggregates zumindest einmal selbsttätig öffnenbar und dann wieder verschließbar ist und die dem Schmutzsammelbehälter abgewandte Seite des mindestens einen Filters mindestens einmal mit Fremdluft beaufschlagbar ist, wobei die Magnethalterung einen Elektromagneten aufweist, der zum Schließen des Schließventils mit Strom beaufschlagbar ist, und wobei beim Abschalten des Saugaggregats gleichzeitig auch die Stromversorgung des Elektromagneten ausschaltbar ist. Der erfindungsgemäße Staubsauger ermöglicht somit nach dem Beenden des normalen Saugbetriebes eine abschließende Abreinigung der zum Einsatz kommenden Filter. Hierzu ist das mindestens eine Schließventil nach dem Abschalten des Saugaggregates selbsttätig öffnenbar und selbsttätig verschließbar, so dass bei bereits ausgeschaltetem Saugaggregat nochmals Fremdluft die dem Schmutzsammelbehälter abgewandte Seite des mindestens einen Filters beaufschlagen und dieses dadurch abreinigen kann. Nach dem Abschalten des Saugaggregates erfährt somit das mindestens eine Filter einen weiteren Druckstoß und wird nochmals in Gegenstromrichtung durchströmt.

Die Magnethalterung des erfindungsgemäßen Staubsaugers weist einen Elektromagneten auf, der zum Schließen des Schließventils mit Strom beaufschlagbar ist, und beim Abschalten des Saugaggregates ist gleichzeitig auch die Stromversorgung des Elektromagneten ausschaltbar. Wie bereits erläutert, kann der Ventilkörper mittels des strombeaufschlagten Elektromagneten während des normalen Saugbetriebes dichtend am Ventilsitz gehalten werden. Zur kurzzeitigen Filterabreinigung kann die Stromversorgung des Elektromagneten unterbrochen werden, so dass der Ventilkörper unter der Wirkung der am Schließventil vorherrschenden Druckdifferenz vom Ventilsitz abhebt. Unter der Wirkung der Schließfeder und des bei einer bevorzugten Ausführungsform zusätzlich zum Einsatz kommenden federnden Anschlagelementes wird der Ventilkörper innerhalb sehr kurzer Zeit wieder zum Ventilsitz zurückgeführt. Spätestens zu diesem Zeitpunkt kann der Elektromagnet erneut mit Strom beaufschlagt werden, um den Ventilkörper nach einem kurzzeitigen Abreinigungsvorgang wieder zuverlässig am Ventilsitz zu halten. Beendet der Benutzer den normalen Saugbetrieb, so schaltet er das mindestens eine Saugaggregat aus, und gleichzeitig wird auch die Stromversorgung des Elektromagneten unterbrochen, so dass der Ventilkörper in seiner Schließstellung nicht mehr mit einer Haltekraft beaufschlagt wird. Dadurch kann, wie bereits erläutert, auf einfache Weise eine wiederholte Öffnungs- und Schließbewegung des federbelasteten Ventilkörpers nach dem Ausschalten des Saugaggregates erzielt werden.

Günstig ist es, wenn das Schließventil nach Abschalten des Staubsaugers mehrmals selbsttätig öffnenbar und dann wieder verschließbar ist. Der abschließende Abreinigungsvorgang kann dadurch verstärkt werden, wie dies voranstehend bereits erläutert wurde.

Bei einer besonders bevorzugten Ausgestaltung des erfindungsgemäßen Staubsaugers ist dem Ventilkörper ein federndes Anschlagelement zugeordnet, das den Ventilkörper in einer zum Ventilkörper beabstandeten Stellung mit einer Rückstoßkraft beaufschlagt. Durch das federnde Anschlagelement kann auf konstruktiv einfache Weise eine kurze Öffnungsbewegung der Ventilkörpers erzielt werden, wobei er ausgehend von seiner Schließstellung zunächst nur mit der Schließkraft der Schließfeder beaufschlagt wird. Erst wenn der Ventilkörper einen gewissen Abstand zum Ventilsitz einnimmt, kommt das federnde Anschlagelement zur Wirkung, das den Ventilkörper mit einer Rückstoßkraft beaufschlagt. Das federnde Anschlagelement nimmt die Bewegungsenergie des Ventilkörpers auf und beschleunigt ihn zurück in Richtung Ventilsitz. Mit Hilfe des federnden Anschlagelementes kann das Schließventil innerhalb sehr kurzer Zeit wieder verschlossen werden, insbesondere nach einer Zeit von weniger als einer Sekunde, vorzugsweise weniger als 0,5 Sekunden. Der normale Saugbetrieb des Staubsaugers kann quasi kontinuierlich fortgesetzt werden, und dennoch kann eine wirkungsvolle Filterabreinigung erzielt werden. Fremdluft tritt nur für einen sehr kurzen Zeitraum in den Schmutzsammelbehälter ein, so dass die Saugströmung im Bereich des Saugeinlasses des Schmutzsammelbehälters nicht merklich unterbrochen wird. Der Staubsauger zeichnet sich folglich durch einen konstruktiv einfachen Aufbau aus, wobei sämtliche vorhandenen Filter im Saugbetrieb gleichzeitig von Saugluft durchströmt werden können und wobei durch kurzzeitiges Öffnen des mindestens einen Schließventils die gesamte, dem Schmutzsammelbehälter abgewandte Seite des mindestens einen Filters mit Fremdluft beaufschlagt werden kann. Die Fremdluft wird dem Filter schlagartig zugeführt, wobei das mindestens eine Saugaggregat permanent mit dem Filter in Strömungsverbindung steht, also auch während der Zeit seiner Abreinigung. Wird das Saugaggregat nach Beendigung des normalen Saugbetriebes abgeschaltet, so übt es für eine gewisse Zeit, beispielsweise für einige Sekunden, noch eine Saugwirkung aus. Da das Schließventil des erfindungsgemäßen Staubsaugers innerhalb sehr kurzer Zeit geöffnet und wieder geschlossen werden kann, reicht die verhältnismäßig kurze Nachlaufzeit des abgeschalteten Saugaggregates aus, um Innerhalb dieser Zeit eine wirkungsvolle abschließende Filterabreinlgung durchführen zu können.

Das federnde Anschlagelement kann in unterschiedlicher Form ausgestaltet sein. Vorzugsweise ist es als Anschlagfeder ausgebildet. Diese weist bei einer bevorzugten Ausgestaltung eine größere Federkonstante auf als die Schließfeder. Die Anschlagfeder ist somit härter als die Schließfeder, das heißt es ist eine höhere Kraft erförderlich, um die Anschlagfeder zusammenzudrücken als dies bei der Schließfeder der Fall ist. Die Anschlagfeder kann ebenso wie die Schließfeder eine lineare oder auch eine nicht-lineare Kennlinie aufweisen. Beispielsweise kann vorgesehen sein, dass die Anschlagfeder und/oder die Schließfeder mit zunehmendem Federweg härter werden.

Bei einer bevorzugten Ausgestaltung des erfindungsgemäßen Staubsaugers sind die Schließfeder und die Anschlagfeder als Schraubenfedern mit unterschiedlichen Durchmessern ausgestaltet, wobei eine der beiden Schraubenfedern die andere Schraubenfeder in Umfangsrichtung umgibt. Dies ermöglicht einen platzsparende Anordnung der Schließfeder und der Anschlagfeder und ermöglicht darüber hinaus eine einfache Montage.

Vorzugsweise umgibt die Schließfeder die Anschlagfeder in Umfangsrichtung. Dies hat den Vorteil, dass der Ventilkörper von einer verhältnismäßig großen Schließfeder in seine Schließstellung geführt wird. Die Kippstabilität der Ventilkörpers wird dadurch verbessert.

Bei einer konstruktiv einfachen Ausgestaltung sind das Saugaggregat und der Elektromagnet über ein gemeinsames Schaltelement mit Spannungsversorgungsanschlüssen verbunden. Das Schaltelement kann den Hauptschalter des Staubsaugers ausbilden, der vom Benutzer manuell betätigt werden kann. Wird der Hauptschalter geschlossen, so wird das Saugaggregat in Gang gesetzt und der Elektromagnet wird mit Strom beaufschlagt. Damit startet der normale Saugbetrieb. Wird der Hauptschalter geöffnet, so wird die Stromversorgung sowohl für das Saugaggregat als auch für den Elektromagneten unterbrochen. Wie bereits erläutert, führt das Saugaggregat dann noch eine Nachlaufbewegung aus und das mindestens eine Filter wird einem abschließenden Abreinigungsvorgang unterworfen.

Vorzugsweise ist der Elektromagnet mit einer Steuereinheit verbunden zum zeitabhängigen Steuern des Elektromagneten. Mittels der zeitabhängigen Steuerung kann eine periodische Filterabreinigung auf konstruktiv einfache Weise erzielt werden.

Von besonderem Vorteil ist es, wenn der Elektromagnet an einer Filterhalterung des Schließventils angeordnet ist, die den Ventilsitz ausbildet, und wenn der Ventilkörper ein dem Elektromagneten zugeordnetes magnetisierbares Element aufweist, das in der Schließstellung des Ventilkörpers mit dem Elektromagneten einen geschlossenen Magnetkreis ausbildet. In der geschlossenen Stellung des Ventilkörpers bündelt das magnetisierbare Element die magnetischen Feldlinien des Elektromagneten. Nimmt der Ventilkörper jedoch einen Abstand zum Ventilsitz ein, so ist der magnetische Kreis zwischen dem Elektromagneten und dem magentisierbaren Element unterbrochen. Das magnetisierbare Element kann beispielsweise plattenförmig ausgebildet und aus einem eisenhaltigen Material hergestellt sein. In der Schließstellung des Ventilkörpers kann es stirnseitig am Elektromagneten anliegen.

Der kombinierte Einsatz eines Elektromagneten, der Schließfeder und eines federnden Anschlagelementes ist von besonderem Vorteil, denn dadurch kann der Ventilkörper in seiner Schließstellung zuverlässig dicht am Ventilsitz gehalten werden. Soll das Schließventil geöffnet werden, so wird die Stromversorgung des Elektromagneten unterbrochen. Bei geschlossenem Schließventil wird der Ventilkörper auf seiner dem Fremdlufteinlass zugewandten Seite mit dem Druck der Fremdluft beaufschlagt, also beispielsweise mit Atmosphärendruck, wohingegen auf seiner dem Fremdlufteinlass abgewandten Seite Unterdruck vorliegt. Wird die Stromversorgung des Elektromagneten unterbrochen, so führt die auf den Ventilkörper einwirkende Druckdifferenz dazu, dass sich dieser entgegen der Wirkung der Schließfeder vom Ventilsitz abhebt, so dass das Schließventil geöffnet wird. Im Abstand zum Ventilsitz trifft der Ventilkörper auf das federnde Anschlagelement, das den Ventilkörper mit einer Rückstoßkraft in Richtung auf den Ventilsitz beaufschlagt. Unter der Wirkung der Rückstoßkraft und der von der Schließfeder ausgeübten Schließkraft erreicht der Ventilkörper innerhalb sehr kurzer Zeit wieder den Ventilsitz. Die Schließfeder hat hierbei die Funktion, den Ventilkörper in den Bereich des Magnetfeldes des Elektromagneten zurückzuführen, so dass der Ventilkörper während des normalen Saugbetriebes von dem erneut mit Strom beaufschlagten Elektromagneten am Ventilsitz gehalten werden kann. Wird jedoch die Stromversorgung des Elektromagneten nach Beendigung des Saugbetriebes gleichzeitig mit dem Abschalten des mindestens einen Saugaggregates unterbrochen, so entfällt die magnetische Haltekraft, und der Ventilkörper kann für einen abschließenden Filterabreinigungsvorgang während der Nachlaufzeit des Saugaggregates eine mehrmalige Hin- und Herbewegung durchführen, wobei sich die Auslenkung des Ventilkörpers aus seiner Schließstellung allmählich verringert.

Der Staubsauger kann mehrere Filter aufweisen, als besonders vorteilhaft hat es sich erwiesen, wenn der Staubsauger ein einziges Filter umfasst. Insbesondere kann vorgesehen sein, dass das Filter durch gleichzeitiges Öffnen aller Schließventile über seine gesamte Fläche mit Fremdluft beaufschlagbar ist. Bei einer konstruktiv besonders einfachen Ausgestaltung des erfindungsgemäßen Staubsaugers weist dieser lediglich ein einziges Schließventil auf, das auf der dem einzigen Filter abgewandten Seite einer Strömungsdurchlässe aufweisenden Filterhalterung positioniert ist. Durch Öffnen des Schließventils wird das einzige Filter über seine gesamte Fläche mit Fremdluft beaufschlagt.

Die erfindungsgemäße Ausgestaltung des Staubsaugers ermöglicht es, während des normalen Saugbetriebes die dem Schmutzsammelbehälter abgewandte Seite des mindestens einen Filters kurzzeitig mit Fremdluft zu beaufschlagen und diese innerhalb kurzer Zeit mittels des Saugaggregates abzusaugen, das auch bei geöffnetem Schließventil mit dem Filter in Strömungsverbindung steht. Günstig ist es, wenn der Ventilkörper während der Abreinigung des Filters eine kontinuierliche Bewegung ausgehend von seiner Schließstellung über seine Offenstellung zurück in seine Schließstellung ausführt. Bei einer derartigen Ausgestaltung wird der Ventilkörper beim Öffnen des Schließventils zunächst stark in die dem Ventilsitz abgewandte Richtung beschleunigt und anschließend mit Hilfe der Schließfeder und vorzugsweise mit Hilfe des federnden Anschlagelementes stark abgebremst und in seiner Bewegungsrichtung umgekehrt, um dann wieder in Richtung auf den Ventilsitz beschleunigt zu werden. Die gesamte Bewegung des Ventilkörpers ausgehend von seiner Schließstellung über die Offenstellung zurück in die Schließstellung kann in Bruchteilen einer Sekunde erfolgen.

Bei einer vorteilhaften Ausführungsform ist das mindestens eine Filter mittels des Schließventils für weniger als 400 Millisekunden, vorzugsweise weniger als 200 Millisekunden, insbesondere für weniger als 100 Millisekunden, mit Fremdluft beaufschlagbar. Eine derartige Beaufschlagung führt für den Benutzer zu keiner merklichen Unterbrechung des Saugbetriebes, sie hat aber eine wirkungsvolle Abreinigung des Filters während des normalen Saugbetriebes zur Folge.

Bevorzugt ist das mindestens eine Filter mittels des zumindest einen Schließventils während des normalen Saugbetriebes unter Aufrechterhaltung eines Unterdrucks im Mündungsbereich eines in den Saugeinlass einmündenden Saugschlauches mit Fremdluft beaufschlagbar. Wird das mindestens eine Schließventil geöffnet, so steigt der Druck auf der dem Schmutzsammelbehälter abgewandten Seite des Filters schlagartig an und wird dann wieder abgebaut. Der schlagartige Druckanstieg bewirkt eine wirkungsvolle Abreinigung des Filters, da der Druckanstieg jedoch von dem mindestens einen Saugaggregat gleich wieder abgebaut wird, führt er nicht zu einer vollständigen Unterbrechung des Unterdrucks im Mündungsbereich des in den Saugeinlass einmündenden Saugschlauches. Es kann vielmehr ein quasi kontinuierlicher Saugbetrieb aufrechterhalten werden.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Staub- saugers;
- Figur 2:: eine vergrößerte Darstellung von Detail A aus Figur 1 und
- Figur 3:: ein Blockschaltbild einer Versorgungsschaltung für einen Elektroma- gneten und ein Saugaggregat des Staubsaugers.

In der Zeichnung ist schematisch ein Staubsauger 10 dargestellt mit einem Unterteil, das einen Schmutzsammelbehälter 12 ausbildet, und mit einem Oberteil 14, das auf das Unterteil aufgesetzt ist und ein Saugaggregat 16 aufnimmt. Der Schmutzsammelbehälter 12 umfasst einen Saugeinlass 18, an den ein Saugschlauch 20 anschließbar ist. An dem in der Zeichnung zur Erzielung einer besseren Übersicht nicht dargestellten freien Ende des Saugschlauches 20 kann eine Saugdüse angeschlossen werden. Alternativ kann vorgesehen sein, dass der Saugschlauch 20 an ein Bearbeitungswerkzeug, beispielsweise ein Bohraggregat oder ein Fräsaggregat, angeschlossen wird, so dass Staub, der während des Betriebes des Bearbeitungswerkzeuges anfällt, abgesaugt werden kann.

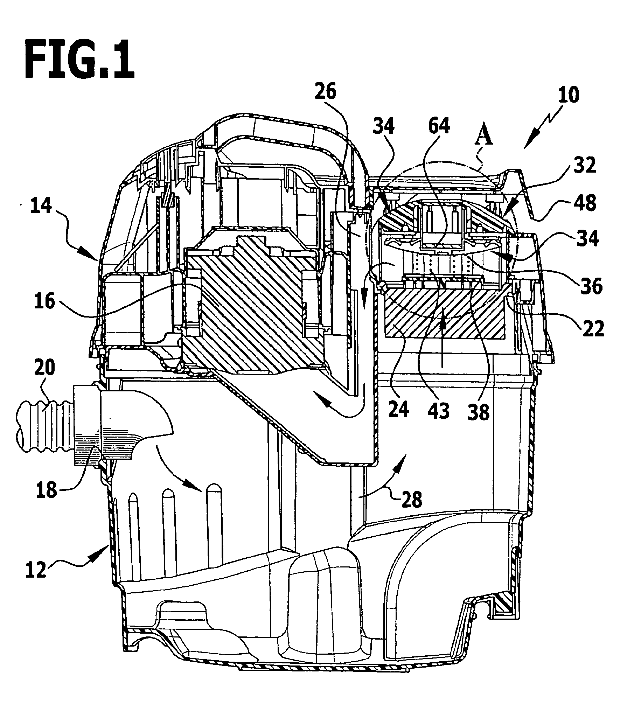

Das Oberteil 14 bildet einen Saugauslass 22 für den Schmutzsammelbehälter 12 aus. Am Saugauslass 22 ist ein Faltenfilter 24 gehalten, an das sich eine Absaugleitung in Form eines Saugaggregates 26 anschließt. Über den Saugkanal 26 steht das Faltenfilter 24 permanent mit dem Saugaggregat 16 in Strömungsverbindung. Der Schmutzsammelbehälter 12 kann über den Saugkanal 26 und das Faltenfilter 24 vom Saugaggregat 16 mit Unterdruck beaufschlagt werden, so dass sich eine in Figur 1 durch die Pfeile 28 symbolisierte Saugströmung ausbildet, unter deren Wirkung Schmutz in den Schmutzsammelbehälter 12 eingesaugt werden kann. Mittels des Faltenfilters 24 können die Schmutzteilchen aus der Saugströmung 28 abgeschieden werden.

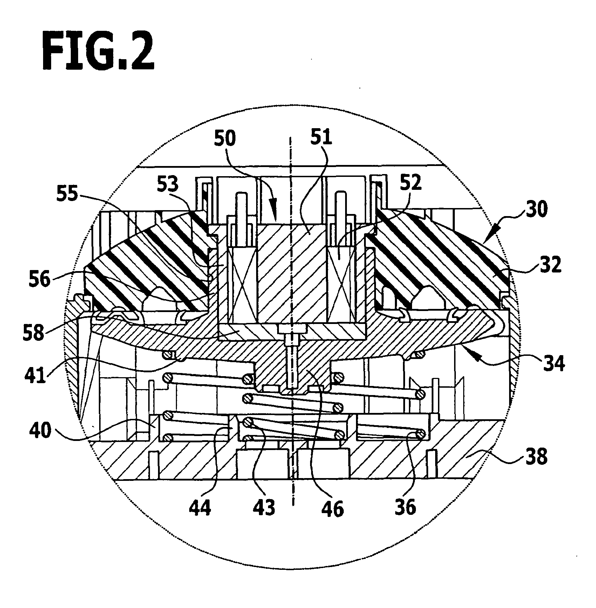

Oberhalb des Faltenfilters 24 ist im Oberteil 14 ein Schließventil 30 angeordnet, das in Figur 2 vergrößert dargestellt ist. Es umfasst eine ortsfest im Oberteil 14 angeordnete Ventilhalterung 32, die einen Ventilsitz ausbildet und mit einem Ventilkörper in Form eines kreisrunden Ventiltellers 34 zusammenwirkt. Der Ventilteller 34 ist mittels einer Schließfeder 36 mit einer Schließkraft in Richtung auf die Ventilhalterung 32 beaufschlagt. Die Schließfeder 36 weist eine lineare Kennlinie auf und ist zwischen einer plattenartigen, eine Vielzahl von Strömungsdurchlässen aufweisenden, ortsfest im Oberteil 14 angeordneten Filterhalterung 38 und dem Ventilteller 34 eingespannt. Die Filterhalterung 38 weist auf ihrer dem Schließventil 30 zugewandten Oberseite einen äußeren Ringkragen 40 auf, der den benachbarten Endbereich der als Schraubenfeder ausgebildeten Schließfeder 36 in Umfangsrichtung umgibt. Der Ventilteller 34 weist auf seiner der Filterhalteurng 38 zugewandten Unterseite einen Ringwulst 41 auf, an dem die Schließfeder 36 außenseitig anliegt.

Zusätzlich zur Schließfeder 36 trägt die Filterhalterung 38 ein federndes Anschlagelement in Form einer Anschlagfeder 43, die ebenso wie die Schließfeder 36 als Schraubenfeder ausgebildet ist und eine lineare Kennlinie aufweist. Zur Halterung der Anschlagfeder 43 umfasst die Filterhalterung 38 auf ihrer dem Schließventil 30 zugewandten Oberseite einen konzentrisch zum äußeren Kragen 40 angeordneten inneren Ringkragen 44, in den die Anschlagfeder 43 mit einem Endabschnitt eintaucht. Fluchtend zum inneren Ringkragen 44 ist an den Ventilteller 34 unterseitig ein Führungszapfen 46 angeformt, der in der Figur 2 dargestellten Schließstellung des Ventiltellers 34 von einem Endbereich der Anschlagfeder 43 umgeben ist. Die Anschlagfeder 43 steht im Gegensatz zur Schließfeder in der Schließstellung des Ventiltellers nicht unter Vorspannung. Erst wenn sich der Ventilteller 34 vom Ventilsitz der Ventilhalterung 32 abhebt, gelangt die Anschlagfeder 43 an der Unterseite des Ventiltellers 34 zur Anlage und wird bei einer weiteren Bewegung des Ventiltellers 34 etwas zusammengedrückt.

Die Ventilhalterung 32 weist eine Vielzahl von in der Zeichnung nicht dargestellten Durchgangsöffnungen auf, die in den Ventilsitz einmünden, an dem der Ventilteller 34 abdichtend anliegt, wenn er seine Schließstellung einnimmt. In Höhe der Ventilhalterung 32 weist das Oberteil 14 eine seitliche Öffnung 48 auf. Über die seitliche Öffnung 48 kann Fremdluft in die Durchgangsöffnungen der Ventilhalterung 32 einströmen. Nimmt der Ventilteller 34 eine zur Ventilhalterung 32 und damit auch zum Ventilsitz beabstandete Stellung ein, so steht die seitliche Öffnung 48 über die Durchgangsöffnungen der Ventilhalterung 32 mit dem Saugkanal 26 in Strömungsverbindung und Fremdluft kann die dem Schmutzsammelbehälter 12 abgewandte Seite des Filters 24 beaufschlagen. Nimmt der Ventilteller 34 seine Schließstellung ein, so ist die Strömungsverbindung zwischen dem Saugkanal 26 und der seitlichen Öffnung 48 unterbrochen.

In einem zentralen Bereich trägt die Ventilhalterung 32 eine Magnethalterung in Form eines Elektromagneten 50 mit einem Magnetkern 51, der von einer Magnetspule 52 umgeben ist. Den außenseitigen Abschluss des Elektromagneten 50 bildet ein zylinderförmiger Mantel 53, der ebenso wie der Magnetkern 51 aus einem magnetisierbaren Material gefertigt ist. Der Mantel 53 ist in Umfangsrichtung von einer Führungsaufnahme in Form eines Ringraumes 55 umgeben, in den eine oberseitig an den Ventilteller 34 angeformte Führungshülse 56 eintaucht. Der Ringraum 55 und die Führungshülse 56 bilden Führungselemente zur verschieblichen Lagerung des Ventiltellers 34 aus. Die Führungshülse 56 nimmt ein magnetisierbares Element in Form einer Eisenplatte 58 auf, die in der Schließstellung des Ventiltellers 34 an der freien Stirnseite des Elektromagneten 50 anliegt und in Kombination mit dem Magnetkern 51 und dem Mantel 53 einen geschlossenen Magnetkreis ausbildet. Der geschlossene Magnetkreis bündelt die Magnetfeldlinien des Elektromagneten 50.

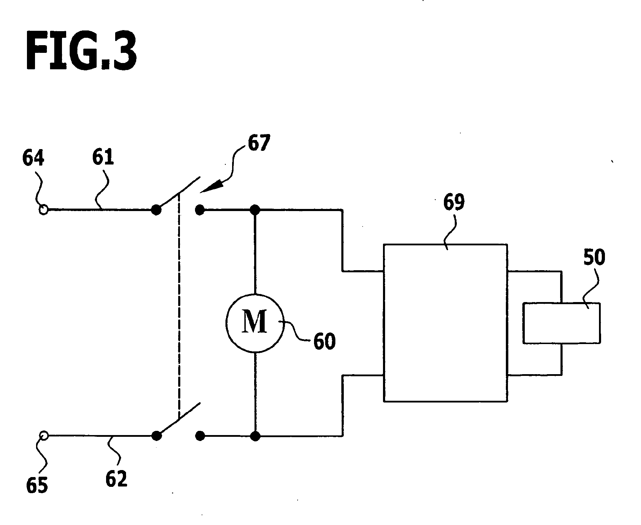

Die Stromversorgung des Elektromagneten 50 und des Saugaggregates 16 ist in Figur 3 schematisch dargestellt. Das Saugaggregat 16 weist einen Elektromotor 60 auf, der über eine erste Versorgungsleitung 61 und eine zweite Versorgungsleitung 62 an Spannungsversorgungsanschlüsse 64 bzw. 65 angeschlossen ist. Die Spannungsversorgungsanschlüsse 64 und 65 können beispielsweise als Netzanschlüsse ausgestaltet sein, an die ein Netzkabel des Staubsaugers 10 angeschlossen sein kann.

In die Versorgungsleitungen 61 und 62 ist ein elektrisches Schaltelement in Form eines Hauptschalters 67 des Staubsaugers 10 geschaltet. Der Hauptschalter 67 ist vom Benutzer manuell betätigbar. Ist der Hauptschalter 67 geschlossen, so ist der Elektromotor 60 des Saugaggregates 16 an die Spannungsversorgungsanschlüsse 64 und 65 angeschlossen und kann mit der Versorgungsspannung versorgt werden. Ist der Hauptschalter 67 geöffnet, so ist die Verbindung zwischen dem Elektromotor 60 und den Spannungsversorgungsanschlüssen 64, 65 unterbrochen.

Parallel zum Elektromotor 60 ist eine Steuereinheit 69 geschaltet, die den Elektromagneten 50 mit Strom versorgt, falls der Hauptschalter 67 geschlossen ist. Ist der Hauptschalter 67 geöffnet, so wird die Stromversorgung des Elektromagneten 50 unterbrochen.

Schaltet der Benutzer den Staubsauger 10 ein, indem er den Hauptschalter 67 schließt, so liegt am Elektromotor 60 die Versorgungsspannung an und das Saugaggregat 16 wird in Gang gesetzt. Gleichzeitig wird der Elektromagnet 50 über die Steuereinheit 69 mit Strom versorgt und der Ventilteller 34 wird vom Elektromagneten 50 mit einer magnetischen Haltekraft beaufschlagt, die ihn zuverlässig in seiner Schließstellung hält. Das Saugaggregat 16 beaufschlagt den Schmutzsammelbehälter 12 und den Saugkanal 26 mit einem Unterdruck, so dass Schmutzpartikel ebenso wie Flüssigkeitströpfchen in den Schmutzsammelbehälter 12 eingesaugt werden können. Schmutzpartikel werden am Filter 24 abgeschieden, so dass sich dieses während des normalen Saugbetriebes allmählich zusetzt. In zeitlichen Abständen von beispielsweise 10 bis 30 Sekunden, insbesondere in zeitlichen Abständen von etwa 15 Sekunden, wird deshalb mittels der Steuereinheit 69 die Stromversorgung des Elektromagneten 50 kurzzeitig für einen Zeitraum von etwa 0,1 Sekunden unterbrochen. Dies hat zur Folge, dass das Magnetfeld des Elektromagneten 50 zusammenbricht und damit die magnetische Haltekraft für den Ventilteller 34 entfällt. Dies wiederum bewirkt, dass der Ventilteller 34 aufgrund der auf ihn einwirkenden Druckdifferenz, die sich aus dem Außendruck der im Bereich der Ventilhalterung 32 vorliegenden Fremdluft und dem Innendruck innerhalb des Saugkanals 26 ergibt, entgegen der Wirkung der Schließfeder 36 vom Ventilsitz abhebt. Fremdluft kann dann schlagartig durch die Durchgangsöffnung der Ventilhalterung hindurch in den Saugkanal 26 einströmen. Das Filter 24 wird somit auf seiner dem Schmutzsammelbehälter 12 abgewandten Seite schlagartig mit Fremdluft beaufschlagt. Dies führt zu einer mechanischen Erschütterung des Filters 24. Außerdem wird das Filter in Gegenstromrichtung von der Fremdluft durchströmt. Dies hat insgesamt eine wirkungsvolle Abreinigung des Filters 24 zur Folge.

Der sich vom Ventilsitz abhebende Ventilteller 34 gelangt nach einer kurzen Hubbewegung mit seiner Unterseite an die Anschlagfeder 43, die den Ventilteller 34 mit einer Rückstoßkraft in Richtung auf die Ventilhalterung 32 beaufschlagt. Die Anschlagfeder 43 nimmt die Bewegungsenergie des Ventiltellers 34 auf. Letzterer wird von der Anschlagfeder 43 in Richtung auf den Ventilsitz beschleunigt. Nähert sich der Ventilteller 34 dem Ventilsitz, so gibt die Anschlagfeder 43 den Ventilteller 34 frei. Letzerer wird von der Schließfeder 36 bis zum Ventilsitz zurückgeführt, so dass die Eisenplatte 58 wieder an der Stirnseite des Elektromagneten 50 zur Anlage gelangt. Spätestens zu diesem Zeitpunkt wird der Elektromagnet 50 von der Steuereinheit 69 erneut mit Strom beaufschlagt, so dass der Ventilteller 34 vom Elektromagneten 50 wieder dichtend am Ventilsitz gehalten wird. Die Unterbrechung der Stromzufuhr für den Elektromagneten 50 erfolgt lediglich über einen Zeitraum von maxiaml 100 Millisekunden, so dass das Schließventil 30 nur für einen sehr kurzen Zeitraum öffnet und Fremdluft zum Filter 24 gelangen kann. Anschließend wird der Elektromagnet 50 wieder mit Strom beaufschlagt, und zwar für einen Zeitraum von etwa 10 bis circa 30 Sekunden, insbesondere für einen Zeitraum von etwa 15 Sekunden. Somit erfolgt während des Saugbetriebes des Staubsaugers 10 alle 15 Sekunden eine kurzzeitige Filterabreinigung. Aufgrund der kurzen Öffnung des Schließventils 30 wird auch während der Filterabreinigung im Mündungsbereich des in den Saugeinlass 18 einströmenden Saugschlauches 20 ein Unterdruck aufrechterhalten. Dies hat zur Folge, dass für den Benutzer ein quasi kontinuierlicher Saugbetrieb möglich ist und dennoch eine zuverlässige Filterabreinigung gewährleistet ist.

Beendet der Benutzer den Saugbetrieb, so öffnet er den Hauptschalter 67. Dies hat zur Folge, dass der Elektromotor 60 des Saugaggregates 16 gleichzeitig mit dem Elektromagneten 50 von den Spannungsversorgungsanschlüssen 64, 65 getrennt wird. Mit dem Ausschalten des Saugaggregates 16 bricht deshalb auch das Magneetfeld des Elektromagneten 50 zusammen. Damit entfällt die auf den Ventilteller 34 einwirkende magnetische Haltekraft. Zu diesem Zeitpunkt stehen der Schmutzsammelbehälter 12 und der Saugkanal 26 noch unter Unterdruck, so dass der Ventilteller 34 einer Druckdifferenz unterliegt und entgegen der Wirkung der Schließfeder 36 vom zugeordneten Ventilsitz abhebt. Entsprechend dem voranstehend erläuterten Abreinigungsvorgang trifft der Ventilteller anschließend auf die Anschlagfeder 43, die den Ventilteller 34 mit einer Rückstoßkraft in Richtung auf den Ventilsitz beaufschlagt, so dass der Ventilteller 34 nach einer sehr kurzen Öffnungsbewegung wieder an der Ventilhalterung 32 zur Anlage gelangt. Während der Öffnungsbewegung strömt Fremdluft an die dem Schmutzsammelbehälter 12 abgewandte Seite des Filters 24 und führt zu einer weiteren Filterabreinigung. Das Saugaggregat 16 wird vom Elektromotor 60 während des normalen Saugbetriebes in Drehung versetzt. Nach Abschalten des Elektromotors 60 läuft das Saugaggregat 16 allmählich aus. Dies hat zur Folge, dass es zumindest einen Teil der während der kurzzeitigen Öffnungsbewegung des Ventiltellers 34 einströmenden Fremdluft absaugt, so dass sich nach dem erneuten Verschließen des Schließventils 30 wiederum ein Unterdruck im Saugkanal 26 und auch im Schmutzsammelbehälter 12 ausbildet. Dies bewirkt, dass sich der Ventilteller 34 erneut vom Ventilsitz abhebt und somit nochmals Fremdluft an die dem Schmutzsammelbehälter 12 abgewandte Seite des Filters 24 gelangen kann. Das nachlaufende Saugaggregat 16 hat somit in Kombination mit dem Ausschalten des Elektromagneten 50 und dem federbelasteten Ventilteller 34 zur Folge, dass das Filter 24 beim Abschalten des Saugaggregates 16 einem abschließenden Abreinigungsvorgang unterworfen wird, wobei der Ventilteller 34 mehrmals eine Hin- und Herbewegung ausführt und das Filter 24 mehreren Druckstößen unterworfen werden kann. Somit wird das Filter 24 nicht nur während des normalen Saugbetriebes in zeitlichen Abständen einer Abreinigung unterworfen, sondern zusätzlich erfolgt nach dem Abschalten des Saugaggregates 16 eine abschließende Filterabreinigung. Beim erneuten Inbetriebestzen des Staubsaugers 10 liegt somit ein abgereinigtes Filter 24 vor.

## Patentansprüche

1. Verfahren zum Abreinigen der Filter eines Staubsaugers (10) mit einem Schmutzsammelbehälter (12), der einen Saugeinlass (18) aufweist und über mindestens ein Filter (24) und zumindest eine Absaugleitung (26) mit mindestens einem Saugaggregat (16) in Strömungsverbindung steht, und mit mindestens einem stromabwärts des mindestens einen Filters (24) in die Absaugleitung (26) einmündenden Fremdlufteinlass (48), der mittels zumindest eines Schließventils (30) verschließbar ist, wobei das mindestens eine Schließventil (30) einen Ventilkörper (34) aufweist, der zwischen einer Schließstellung, in der er an einem Ventilsitz anliegt, und einer Offenstellung, in der er zum Ventilsitz beabstandet ist, hin und her bewegbar ist, wobei er von einer Schließfeder (36) mit einer Schließkraft und in der Schließstellung von einer Magnethalterung zusätzlich mit einer magnetischen Haltekraft beaufschlagt ist, wobei man zur Abreinigung des mindestens einen Filters (24) zumindest ein Schließventil (30) öffnet und die dem Schmutzsammelbehälter (12) abgewandte Seite des mindestens einen Filters (24) mit Fremdluft beaufschlagt, **dadurch gekennzeichnet, dass** man nach dem Abschalten des mindestens einen Saugaggregates (16) zumindest ein Schließventil (30) mindestens einmal öffnet und dann wieder verschließt und die dem Schmutzsammelbehälter (12) abgewandte Seite des mindestens einen Filters (24) mindestens einmal mit Fremdluft beaufschlagt, wobei man die Magnethalterung mit einem Elektromagneten (50) ausrüstet, den man zum Schließen des Schließventils (30) mit Strom beaufschlagt, und wobei man beim Abschalten des Saugaggregates (16) gleichzeitig auch die Stromversorgung des Elektromagneten (50) ausschaltet.

2. Verfahren nach Anspruch 1, **dadurch gekennzeichnet, dass** man nach dem Abschalten des Saugaggregates (16) zumindest ein Schließventil (30) mehrmals öffnet und wieder verschließt.

3. Verfahren nach Anspruch 1 oder 2, **dadurch gekennzeichnet, dass** man den Ventilkörper (34) unabhängig von seiner Stellung permanent mit einer Schließkraft der Schließfeder (36) und in einer zum Ventilsitz beabstandeten Stellung zusätzlich mit der Rückstoßkraft eines federnden Anschlagelements (43) beaufschlagt.

4. Verfahren nach einem der voranstehenden Ansprüche, **dadurch gekennzeichnet, dass** man den Staubsauger (10) mit einem einzigen Filter (24) ausrüstet.

5. Verfahren nach einem der voranstehenden Ansprüche, **dadurch gekennzeichnet, dass** man die gesamte, dem Schmutzsammelbehälter (12) abgewandte Fläche des mindestens einen Filters (24) durch Öffnen von einem einzigen Schließventil (30) mit Fremdluft beaufschlagt.

6. Verfahren nach einem der voranstehenden Ansprüche, **dadurch gekennzeichnet, dass** man das mindestens eine Schließventil (30) elektronisch betätigt.

7. Verfahren nach einem der voranstehenden Ansprüche, **dadurch gekennzeichnet, dass** man das mindestens eine Schließventil (30) zeitgesteuert betätigt.

8. Verfahren nach Anspruch 7, **dadurch gekennzeichnet, dass** man das mindestens eine Schließventil (30) in zeitlichen Abständen von weniger als 30 Sekunden periodisch betätigt.

9. Staubsauger zur Durchführung des Verfahrens nach einem der voranstehenden Ansprüche, mit einem Schmutzsammelbehälter (12), der einen Saugeinlass (18) aufweist und über mindestens ein Filter (24) und zumindest eine Absaugleitung (26) mit mindestens einem Saugaggregat (16) in Strömungsverbindung steht, und mit mindestens einem stromabwärts des mindestens einen Filters (24) in die Absaugleitung (26) einmündenden Fremdlufteinlass (48), der mittels zumindest eines Schließventils (30) verschließbar ist, wobei das mindestens eine Schließventil (30) einen Ventilkörper (34) aufweist, der zwischen einer Schließstellung, in der er an einem Ventilsitz anliegt, und einer Offenstellung, in der er zum Ventilsitz beabstandet ist, hin und her bewegbar ist, wobei er von einer Schließfeder (36) mit einer Schließkraft und in der Schließstellung zusätzlich von einer Magnethalterung mit einer magnetischen Haltekraft beaufschlagt ist, **dadurch gekennzeichnet, dass** das Schließventil (30) nach dem Abschalten des Saugaggregates (16) zumindest einmal selbsttätig öffnenbar und dann wieder verschließbar ist und die dem Schmutzsammelbehälter (12) abgewandte Seite des mindestens einen Filters (24) mindestens einmal mit Fremdluft beaufschlagbar ist, wobei die Magnethalterung einen Elektromagneten (50) aufweist, der zum Schließen des Schließventils (30) mit Strom beaufschlagbar ist, und wobei beim Abschalten des Saugaggregates (16) gleichzeitig auch die Stromversorgung des Elektromagneten (50) ausschaltbar ist.

10. Staubsauger nach Anspruch 9, **dadurch gekennzeichnet, dass** das Schließventil (30) nach dem Abschalten des Saugaggregates (16) mehrmals selbsttätig öffnenbar und dann wieder verschließbar ist.

11. Staubsauger nach Anspruch 9 oder 10, **dadurch gekennzeichnet, dass** dem Ventilkörper (34) ein federndes Anschlagelement (43) zugeordnet ist, das den Ventilkörper (34) in einer zum Ventilsitz beabstandeten Stellung mit einer Rückstoßkraft beaufschlagt.

12. Staubsauger nach Anspruch 11, **dadurch gekennzeichnet, dass** das federnde Anschlagelement als Anschlagfeder (43) ausgestaltet ist.

13. Staubsauger nach Anspruch 12, **dadurch gekennzeichnet, dass** die Federkonstante der Anschlagfeder (43) größer ist als die Federkonstante der Schließfeder (36).

14. Staubsauger nach Anspruch 12 oder 13, **dadurch gekennzeichnet, dass** die Schließfeder (36) und die Anschlagfeder (43) als Schraubenfedern mit unterschiedlichen Durchmessern ausgestaltet sind, wobei eine der beiden Schraubenfedern die andere Schraubenfeder in Umfangsrichtung umgibt.

15. Staubsauger nach einem der Ansprüche 9 bis 14, **dadurch gekennzeichnet, dass** das Saugaggregat (16) und der Elektromagnet (50) über ein gemeinsames Schaltelement (67) mit Spannungsversorgungsanschlüssen (64, 65) verbunden sind.

16. Staubsauger nach einem der Ansprüche 9 bis 15, **dadurch gekennzeichnet, dass** der Elektromagnet (50) mit einer Steuereinheit (69) verbunden ist zum zeitabhängigen Steuern des Elektromagneten (50).

17. Staubsauger nach einem der Ansprüche 9 bis 16, **dadurch gekennzeichnet, dass** der Elektromagnet (50) an einer Ventilhalterung (32) angeordnet ist, die den Ventilsitz ausbildet, und dass der Ventilkörper (34) ein dem Elektromagnet (50) zugeordnetes magnetisierbares Element (58) aufweist, das in der Schließstellung des Ventilkörpers (34) mit dem Elektromagneten (50) einen geschlossenen Magnetkreis ausbildet.

18. Staubsauger nach einem der Ansprüche 9 bis 17, **dadurch gekennzeichnet, dass** der Staubsauger (10) ein einziges Filter aufweist.

19. Staubsauger nach Anspruch 18, **dadurch gekennzeichnet, dass** das Filter (24) durch Öffnen des Schließventils (30) über seine gesamte Fläche mit Fremdluft beaufschlagbar ist.

20. Staubsauger nach einem der Ansprüche 9 bis 19, **dadurch gekennzeichnet, dass** der Ventilkörper (34) ausgehend von seiner Schließstellung über seine Offenstellung kontinuierlich in seine Schließstellung zurückbewegbar ist.

21. Staubsauger nach einem der Ansprüche 9 bis 20, **dadurch gekennzeichnet, dass** das mindestens eine Filter (24) mittels des mindestens einen Schließventils (30) für weniger als 400 Millisekunden mit Fremdluft beaufschlagbar ist.

22. Staubsauger nach einem der Ansprüche 9 bis 21, **dadurch gekennzeichnet, dass** das mindestens eine Filter (24) mittels des mindestens einen Schließventils (30) unter Aufrechterhaltung eines Unterdruckes im Mündungsbereich eines in den Saugeinlass (18) einmündenden Saugschlauches (20) mit Fremdluft beaufschlagbar ist.

## Claims

1. Method for cleaning the filters of a vacuum cleaner (10) comprising a dirt collecting container (12), which has a suction inlet (18) and is in flow connection with at least one suction unit (16) via at least one filter (24) and at least one suction extraction line (26), and comprising at least one external air inlet (48) which opens into the suction extraction line (26) downstream of the at least one filter (24) and is adapted to be closed by means of at least one closing valve (30), wherein the at least one closing valve (30) has a valve body (34) which is movable back and forth between a closed position, in which it lies against a valve seat, and an open position, in which it is at a distance from the valve seat, wherein it is acted upon by a closing spring (36) with a closing force and, in the closed position, by a magnetic holder additionally with a magnetic holding force, wherein, in order to clean the at least one filter (24), at least one closing valve (30) is opened and the side of the at least one filter (24) that is oriented away from the dirt collecting container (12) is impinged upon by external air, **characterized in that**, after the at least one suction unit (16) is switched off, at least one closing valve (30) is opened at least once and then closed again and the side of the at least one filter (24) that is oriented away from the dirt collecting container (12) is impinged upon at least once by external air, the magnetic holder being equipped with an electromagnet (50), to which current is applied to close the closing valve (30), and the current supply to the electromagnet (50) also being switched off at the same time as the suction unit (16) is switched off.

2. Method according to Claim 1, **characterized in that**, after the suction unit (16) is switched off, at least one closing valve (30) is repeatedly opened and closed again.

3. Method according to Claim 1 or 2, **characterized in that** a closing force of the closing spring (36) is made to act permanently on the valve body (34), irrespective of its position, and the repulsion force of a resilient stop element (43) is additionally made to act upon the valve body in a position at a distance from the valve seat.

4. Method according to one of the preceding claims, **characterized in that** the vacuum cleaner (10) is equipped with a single filter (24).

5. Method according to one of the preceding claims, **characterized in that** the entire surface area of the at least one filter (24) that is oriented away from the dirt collecting container (12) is impinged upon by external air by opening a single closing valve (30).

6. Method according to one of the preceding claims, **characterized in that** the at least one closing valve (30) is actuated electronically.

7. Method according to one of the preceding claims, **characterized in that** the at least one closing valve (30) is actuated in a time-controlled manner.

8. Method according to Claim 7, **characterized in that** the at least one closing valve (30) is actuated periodically at time intervals of less than 30 seconds.

9. Vacuum cleaner for carrying out the method according to one of the preceding claims, comprising a dirt collecting container (12), which has a suction inlet (18) and is in flow connection with at least one suction unit (16) via at least one filter (24) and at least one suction extraction line (26), and comprising at least one external air inlet (48) which opens into the suction extraction line (26) downstream of the at least one filter (24) and is adapted to be closed by means of at least one closing valve (30), wherein the at least one closing valve (30) has a valve body (34) which is movable back and forth between a closed position, in which it lies against a valve seat, and an open position, in which it is at a distance from the valve seat, wherein it is acted upon by a closing spring (36) with a closing force and, in the closed position, additionally by a magnetic holder with a magnetic holding force, **characterized in that**, after the suction unit (16) is switched off, the closing valve (30) can be automatically opened at least once and then closed again and the side of the at least one filter (24) that is oriented away from the dirt collecting container (12) can be impinged upon at least once by external air, the magnetic holder having an electromagnet (50), to which current can be applied to close the closing valve (30), and it being possible for the current supply to the electromagnet (50) also to be switched off at the same time as the suction unit (16) is switched off.

10. Vacuum cleaner according to Claim 9, **characterized in that**, after the suction unit (16) is switched off, the closing valve (30) can be automatically opened and then closed again repeatedly.

11. Vacuum cleaner according to Claim 9 or 10, **characterized in that** associated with the valve body (34) is a resilient stop element (43), which acts with a repulsion force upon the valve body (34) in a position at a distance from the valve seat.

12. Vacuum cleaner according to Claim 11, **characterized in that** the resilient stop element is configured as a stop spring (43).

13. Vacuum cleaner according to Claim 12, **characterized in that** the spring constant of the stop spring (43) is greater than the spring constant of the closing spring (36).

14. Vacuum cleaner according to Claim 12 or 13, **characterized in that** the closing spring (36) and the stop spring (43) are configured as helical springs of different diameters, one of the two helical springs circumferentially surrounding the other helical spring.

15. Vacuum cleaner according to one of Claims 9 to 14, **characterized in that** the suction unit (16) and the electromagnet (50) are connected via a common switching element (67) to voltage supply terminals (64, 65).

16. Vacuum cleaner according to one of Claims 9 to 15, **characterized in that** the electromagnet (50) is connected to a control unit (69) for the time-dependent control of the electromagnet (50).

17. Vacuum cleaner according to one of Claims 9 to 16, **characterized in that** the electromagnet (50) is disposed on a valve holder (32) that forms the valve seat, and **in that** the valve body (34) has a magnetizable element (58) which is associated with the electromagnet (50) and forms a closed magnetic circuit with the electromagnet (50) in the closed position of the valve body (34).

18. Vacuum cleaner according to one of Claims 9 to 17, **characterized in that** the vacuum cleaner (10) has a single filter.

19. Vacuum cleaner according to Claim 18, **characterized in that** the filter (24) is adapted to be impinged upon by external air over its entire surface area by opening of the closing valve (30).

20. Vacuum cleaner according to one of Claims 9 to 19, **characterized in that** the valve body (34) is movable continuously from its closed position via its open position back into its closed position.

21. Vacuum cleaner according to one of Claims 9 to 20, **characterized in that** the at least one filter (24) is adapted to be impinged upon by external air by means of the at least one closing valve (30) for less than 400 milliseconds.

22. Vacuum cleaner according to one of Claims 9 to 21, **characterized in that** the at least one filter (24) is adapted to be impinged upon by external air by means of the at least one closing valve (30) while maintaining a negative pressure in the region of the opening of a suction hose (20) opening into the suction inlet (18).

## Revendications

1. Procédé pour nettoyer les filtres d'un aspirateur (10), comportant un collecteur de poussières (12), qui comporte une entrée d'aspiration (18) et qui est en liaison fluidique avec au moins un organe d'aspiration (16) en passant par au moins un filtre (24) et au moins une conduite d'aspiration (26), et comportant au moins une entrée d'air extérieur (48), qui débouche, en aval dudit au moins un filtre (24), dans la conduite d'aspiration (26) et qui peut être fermée par au moins une soupape de fermeture (30), ladite au moins une soupape de fermeture (30) comportant un corps de soupape (34), qui peut être déplacé en va-et-vient entre une position de fermeture, dans laquelle il est en appui contre un siège de soupape, et une position d'ouverture, dans laquelle il est situé à distance du siège de soupape, sachant qu'il est sollicité par une force de fermeture exercée par un ressort de fermeture (36) et, en plus, dans la position de fermeture, par une force de retenue magnétique émanant d'un support d'aimant, sachant que, pour le nettoyage dudit au moins un filtre (24), on ouvre au moins une soupape de fermeture (30), et le côté dudit au moins un filtre (24), détourné du collecteur de poussières (12), est sollicité par de l'air extérieur, **caractérisé en ce que**, après avoir déconnecté ledit au moins un organe d'aspiration (16), on ouvre au moins une fois au moins une soupape de fermeture (30) et on la referme à nouveau, et le côté dudit au moins un filtre (24), détourné du collecteur de poussières (12), est sollicité au moins une fois avec de l'air extérieur, sachant que l'on équipe le support d'aimant avec un électroaimant (50), dans lequel on fait passer du courant pour fermer la soupape de fermeture (30), et sachant que, lors de la déconnexion de l'organe d'aspiration (16), on coupe aussi en même temps l'alimentation en courant de l'électroaimant (50).

2. Procédé selon la revendication 1, **caractérisé en ce que**, après la déconnexion de l'organe d'aspiration (16), on ouvre plusieurs fois au moins une soupape de fermeture (30) et on la referme à nouveau.

3. Procédé selon la revendication 1 ou 2, **caractérisé en ce que**, indépendamment de sa position, on sollicite en permanence le corps de soupape (34) avec une force de fermeture exercée par le ressort de fermeture (36) et, en plus, dans une position écartée du siège de soupape, avec la force de recul exercée par un élément de butée (43) à ressort.

4. Procédé selon l'une quelconque des revendications précédentes, **caractérisé en ce que** l'on équipe l'aspirateur (10) avec un unique filtre (24).

5. Procédé selon l'une quelconque des revendications précédentes, **caractérisé en ce que** l'on sollicite la totalité de la surface dudit au moins un filtre (24), détournée du collecteur de poussières (12), avec de l'air extérieur sous l'effet de l'ouverture d'une unique soupape de fermeture (30).

6. Procédé selon l'une quelconque des revendications précédentes, **caractérisé en ce que** l'on actionne par voie électronique ladite au moins une soupape de fermeture (30).

7. Procédé selon l'une quelconque des revendications précédentes, **caractérisé en ce que** l'on actionne de manière commandée dans le temps ladite au moins une soupape de fermeture (30).

8. Procédé selon la revendication 7, **caractérisé en ce que** l'on actionne périodiquement ladite au moins une soupape de fermeture (30) à des intervalles de temps inférieurs à 30 secondes.

9. Aspirateur pour la mise en oeuvre du procédé selon l'une quelconque des revendications précédentes, comportant un collecteur de poussières (12, qui comporte une entrée d'aspiration (18) et qui est en liaison fluidique avec au moins un organe d'aspiration (16) en passant par au moins un filtre (24) et au moins une conduite d'aspiration (26), et comportant au moins une entrée d'air extérieur (48), qui débouche, en aval dudit au moins un filtre (24), dans la conduite d'aspiration (26) et qui peut être fermée par au moins une soupape de fermeture (30), ladite au moins une soupape de fermeture (30) comportant un corps de soupape (34), qui peut être déplacé en va-et-vient entre une position de fermeture, dans laquelle il est en appui contre un siège de soupape, et une position d'ouverture, dans laquelle il est situé à distance du siège de soupape, sachant qu'il est sollicité par une force de fermeture exercée par un ressort de fermeture (36) et, en plus, dans la position de fermeture, par une force de retenue magnétique émanant d'un support d'aimant, **caractérisé en ce que** la soupape de fermeture (30), après la déconnexion de l'organe d'aspiration (16), peut être ouverte au moins une fois automatiquement et être à nouveau refermée, et le côté dudit au moins un filtre (24), détourné du collecteur de poussières (12), peut être sollicité au moins une fois avec de l'air extérieur, le support d'aimant étant muni d'un électroaimant (50), qui peut être alimenté en courant pour fermer la soupape de fermeture (30), et sachant que, lors de la déconnexion de l'organe d'aspiration (16), l'alimentation en courant de l'électroaimant (50) peut être aussi en même temps coupée.

10. Aspirateur selon la revendication 9, **caractérisé en ce que** la soupape de fermeture (30), après la déconnexion de l'organe d'aspiration (16), peut être ouverte plusieurs fois automatiquement et peut à nouveau être refermée.

11. Aspirateur selon la revendication 9 ou 10, **caractérisé en ce qu'**au corps de soupape (34) est associé un élément de butée (43) à ressort, qui exerce une force de recul sur le corps de soupape (34) lorsque celui-ci est dans une position écartée du siège de soupape.

12. Aspirateur selon la revendication 11, **caractérisé en ce que** l'élément de butée à ressort est réalisé sous la forme d'un ressort de butée (43).

13. Aspirateur selon la revendication 12, **caractérisé en ce que** la constante de ressort du ressort de butée (43) est supérieure à la constante de ressort du ressort de fermeture (36).

14. Aspirateur selon la revendication 12 ou 13, **caractérisé en ce que** le ressort de fermeture (36) et le ressort de butée (43) sont réalisés sous forme de ressorts cylindriques avec des diamètres différents, l'un des deux ressorts cylindriques entourant dans la direction circonférentielle l'autre ressort cylindrique.

15. Aspirateur selon l'une quelconque des revendications 9 à 14, **caractérisé en ce que** l'organe d'aspiration (16) et l'électroaimant (50) sont reliés à des raccords d'alimentation en courant (64, 65) par l'intermédiaire d'un élément de commutation (67) commun.

16. Aspirateur selon l'une quelconque des revendications 9 à 15, **caractérisé en ce que** l'électroaimant (50) est relié à une unité de commande (69) en vue de la commande en fonction du temps de l'électroaimant (50).

17. Aspirateur selon l'une quelconque des revendications 9 à 16, **caractérisé en ce que** l'électroaimant (50) est disposé sur un support de soupape (32), qui constitue le siège de soupape, et **en ce que** le corps de soupape (34) comporte un élément (58) magnétisable, qui est associé à l'électroaimant (50) et qui, dans la position de fermeture du corps de soupape (34), forme un circuit magnétique fermé avec l'électroaimant (50).

18. Aspirateur selon l'une quelconque des revendications 9 à 17, **caractérisé en ce que** l'aspirateur (10) comporte un unique filtre.

19. Aspirateur selon la revendication 18, **caractérisé en ce que** le filtre (24) peut être sollicité par de l'air extérieur sur toute sa surface, sous l'effet de l'ouverture de la soupape de fermeture (30).

20. Aspirateur selon l'une quelconque des revendications 9 à 19, **caractérisé en ce que** le corps de soupape (34), à partir de sa position de fermeture, peut être ramené continûment à nouveau dans sa position de fermeture en passant par sa position d'ouverture.

21. Aspirateur selon l'une quelconque des revendications 9 à 20, **caractérisé en ce que** ledit au moins un filtre (24) peut être sollicité avec de l'air extérieur pendant moins de 400 millisecondes au moyen de ladite au moins une soupape de fermeture (30).

22. Aspirateur selon l'une quelconque des revendications 9 à 21, **caractérisé en ce que** ledit au moins un filtre (24) peut être sollicité avec de l'air extérieur par ladite au moins une soupape de fermeture (30) moyennant le maintien d'une dépression dans la zone de la bouche d'un tuyau flexible d'aspiration (20) débouchant dans l'entrée d'aspiration (18).
